# EUROPEAN PATENT SPECIFICATION

(11) **EP 3 228 230 B1**
(45) Date of publication and mention of the grant of the patent: **18.12.2019**
(21) Application number: 17164107.9
(22) Date of filing: 31.03.2017
(51) Int. Cl.: A47J 31/44, A47J 31/52, A47J 31/06

(54) **COFFEE MACHINE WITH CREAM FROTHER VALVE**
KAFFEEMASCHINE MIT CREMESCHAUMVENTIL
MACHINE À CAFÉ AVEC SOUPAPE DE MOUSSANT DE CRÈME

(30) Priority: 04.04.2016 IT UA20162266
(43) Date of publication of application: 11.10.2017
(73) Proprietor: De'Longhi Appliances S.r.l., 31100 Treviso (IT)
(72) Inventor: DE' LONGHI, Giuseppe, 31100 Treviso (IT); EVANGELISTI, Paolo, 40138 Bologna (IT); ZARATIN, Enrico, 31038 Paese (Treviso) (IT)
(74) Representative: Rapisardi, Mariacristina

(56) References cited:
- EP-A2- 1 133 944
- WO-A1-2014/028844
- WO-A1-2017/046100
- DE-U1-202006 014 317
- KR-A- 20120 117 529

## Description

The present invention relates to a coffee machine of the type comprising an infusion chamber connected to an external dispenser through a dispensing line having a cream frother valve.

The cream frother valve is arranged in a normally closed position at the outlet of the infusion chamber and is set to open once a certain hydraulic pressure is exceeded in the infusion chamber itself.

A traditional cream frother valve is generally a mechanical valve having a movable shutter activated by a spring.

The role of the cream frother valve in the production of coffee with the desired organoleptic characteristics is known.

The cream frother valve optimises the process of extracting the aromatic essence from the coffee powder contained in the infusion chamber and gives the resulting infusion the necessary consistency.

One of the main limits of the traditional cream frother valve consists of the fact that its effectiveness may depend on the dispensing cycle selected by the user.

An automatic or semi-automatic coffee machine as known has a control panel through which the different dispensing cycles can be selected, for example a dispensing cycle with coarsely or finely ground coffee, a dispensing cycle of a long or ristretto or americano coffee, a dispensing cycle of a single or double dose, etc.

Often the cream frother valve is not able to guarantee correct operation as the selected dispensing cycle varies, with the result that the dispensing cycle risks being performed in an abnormal way and, in fact, sometimes a poor quality product is obtained in the cup.

For example, a cream frother valve that is set in an ideal way in a dispensing cycle for the production of a single coffee with a large particle size powder, may even be an obstacle in a dispensing cycle for the production of a double coffee with powder that has a fine particle size where the passage of the liquid is obstructed more both due to the fact that the liquid must cross a thicker layer of coffee and due to the fact that the liquid encounters more resistance when it passes through a finer coffee powder. Dispensing under such circumstance may be intermittent and excessively slow.

On the other hand, the use of a valve ideally set for a dispensing cycle of a ristretto coffee may not be so effective for a dispensing cycle of an americano coffee.

The technical task of the present invention is, therefore, to provide a coffee machine with a cream frother valve which obviates the above-described technical drawbacks of the prior art.

WO2014/028844 A1 EP1 133 944 A2, KR 2012 0117529 A and DE 202006014317 U1 disclose, a coffee machine comprising a hydraulic circuit according to the preamble of claim 1.

Within the scope of this technical task an object of the invention is to provide a coffee machine equipped with a cream frother valve that allows the correct dispensing regardless of the dispensing cycle selected.

The technical task, as well as these and other objects, according to the present invention are reached by providing a coffee machine according to claim 1.

In a preferred embodiment of the invention, said control unit controls said motorized regulating means in real time.

In a preferred embodiment of the invention said control unit has corresponding reference values stored in the memory thereof, referring to the flow rate and/or pressure present in the hydraulic circuit for each selectable infusion cycle.

In a preferred embodiment of the invention said control unit is configured so as to compare the current flow rate and/or pressure value detected in an infusion cycle with the corresponding reference value and to control the motorized means so as to eliminate any deviation between said values.

In a preferred embodiment of the invention, said detection means comprises a flow meter and/or a pressure switch.

According to the invention said cream frother valve comprises a valve body in which there is a shutter connected to said motorized regulating means.

According to the invention said shutter is connected to said regulating means with interposition of an elastic element.

In a preferred embodiment of the invention said motorized means comprises a linear motor that has a translating output shaft and said elastic element consists of a helical spring positioned coaxially with said output shaft.

In a preferred embodiment of the invention said valve body has an inlet line, an outlet line and a relief line.

In a preferred embodiment of the invention a hydraulic sealing means is provided that is movable between a connecting position and an isolating position between said outlet line and said relief line of said cream frother valve.

In a preferred embodiment of the invention, said hydraulic sealing means comprises at least one sealing gasket.

In a preferred embodiment of the invention said output shaft extends within said valve body and integrally bears said sealing gasket.

In a preferred embodiment of the invention said dispensing line comprises at least one hose.

In a preferred embodiment of the invention a post-dispensing cycle is envisaged in which said regulating means arranges said hydraulic sealing means in said connecting position.

In a preferred embodiment of the invention a pre-dispensing cycle is envisaged in which said cream frother valve is set at the maximum opening pressure by said regulating means.

Further characteristics and advantages of the invention will become more apparent from the description of a preferred, but not exclusive, embodiment of the coffee machine according to the invention, which is illustrated by way of approximate and non-limiting example in the attached drawings, of which:

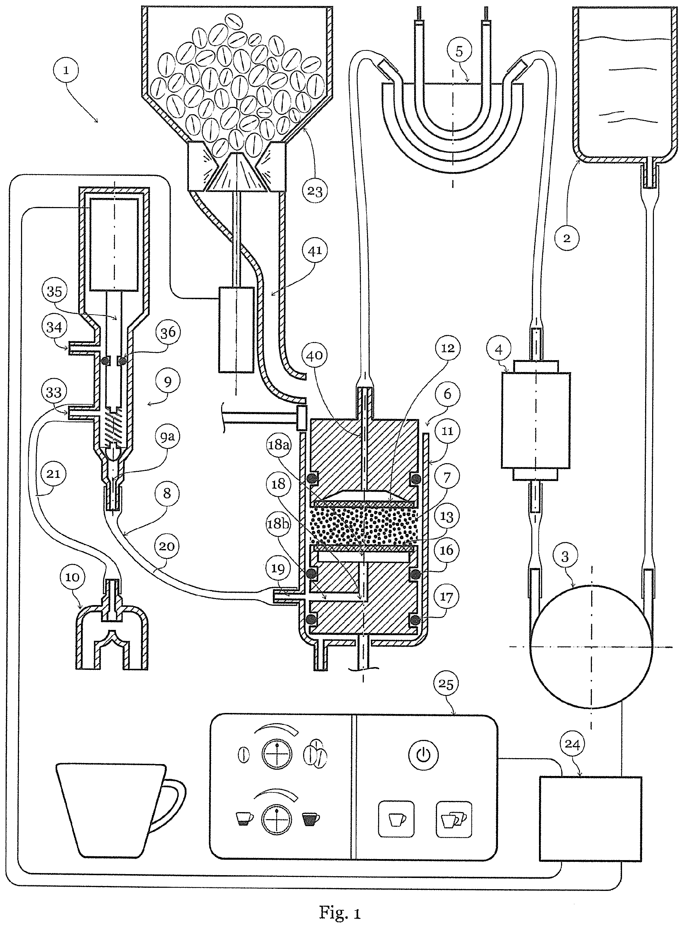

figure 1 schematically shows a coffee machine in compliance with the invention, in the dispensing step; and

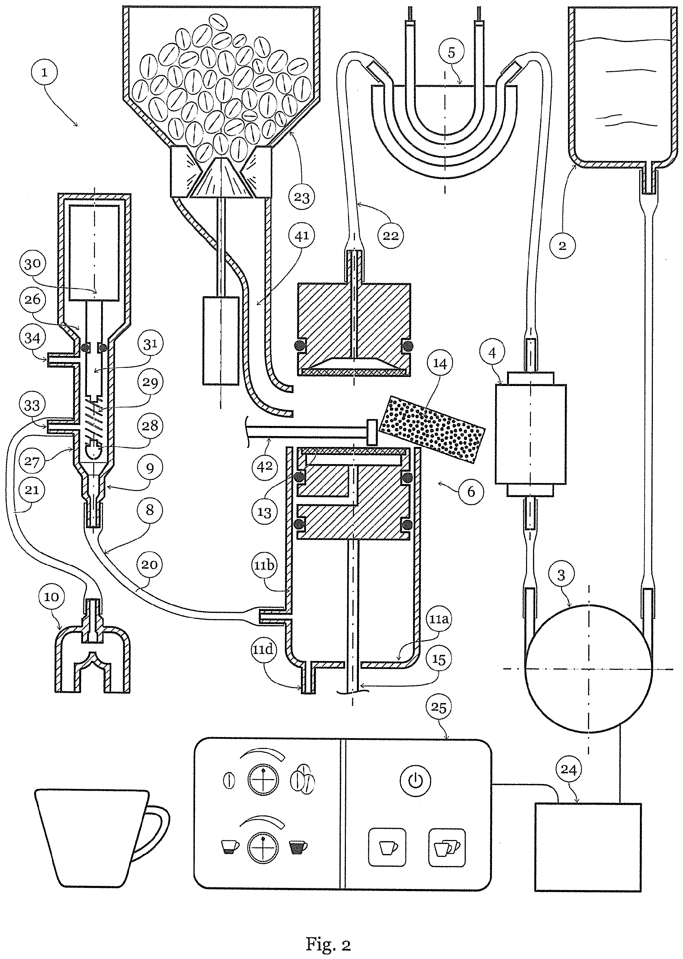

figure 2 shows the coffee machine of figure 1 whilerelieving the residual pressure at the end of the dispensing step.

With reference to the figures cited, a coffee machine is shown and indicated in its entirety by reference number 1.

The coffee machine 1 comprises a hydraulic circuit which in a known way comprises, in cascade, a water tank 2, a pressure detector and/or a flow rate detector and in particular a flow meter 3 (or pressure switch, not shown, in addition to or instead of the flow meter, which pressure switch is positioned downstream of the supply pump 4), a supply pump 4, a boiler 5, an infusion device 6, a dispensing line 8 for dispensing the infusion equipped with a cream frother valve 9, and an external dispenser 10.

The coffee machine 1 further comprises a grinder 23 equipped with a system (not shown) for regulating the particle size of the ground coffee with which the infusion device 6 is loaded.

The coffee machine 1 finally comprises an electronic controller 24 and a control panel 25 through which the user can select the desired dispensing cycle.

The infusion device 6 comprises an infusion cylinder 11 having a bottom 11 a through whose thickness a relief line 11d is formed, a lateral wall 11b and an open top 11c.

The infusion device 6 further comprises a closing piston 12 engageable in the infusion cylinder 11 through the open top 11c of the latter.

The infusion cylinder 11 supports an ejection piston 13 within it which, in cooperation with the lateral wall 11b of the infusion cylinder 11 and the closing piston 12, is adapted to delimit an infusion chamber 7.

The infusion cylinder 11 and the closing piston 12 are supported by the frame of the coffee machine 1 so as to be able to perform a relative displacement between a closing configuration of the infusion chamber 7 in which the closing piston 12 is engaged sealingly in the infusion cylinder 11 and an opening configuration of the infusion chamber 7 in which one is disengaged from the other.

In particular the infusion cylinder 11 is supported translatably or rototranslatably along a relevant guide not shown, and is movable by a relevant motorization, also not shown.

The closing piston 12 has one or more internal lines 40 through which it is in connection with the delivery of the boiler 5, through a connection pipe 22.

The ejection piston 13 is supported slidably coaxially in the infusion cylinder 11 between an infusion configuration in which it is retracted towards the bottom 11a of the infusion cylinder 11 and an ejection configuration of the load of spent coffee grounds 14 in which it is protracted towards the top 11c of the infusion cylinder 11.

For its movement in the infusion cylinder 11 the ejection piston 13 exploits an activation system, not shown as already known, which acts directly on its stem 15. The ejection piston 13 is equipped with radial sealing gaskets 16, 17 with the lateral wall 11b of the infusion cylinder 11 and has an internal channel 18 which defines the dispensing line 8 in combination with a relevant channel 19 passing through the wall thickness of the infusion cylinder 11, with a first hose 20 that connects the through channel 19 to the cream frother valve 9, and with a second hose 21 that connects the cream frother valve 9 to the external dispenser 10.

The internal channel 18 of the ejection piston 13 has an inlet line 18a that opens onto the front wall of the ejection piston 13 which delimits the infusion chamber 7 and an outlet line 18b that opens onto the lateral wall of the ejection piston 13 between the two gaskets 16, 17.

In its infusion configuration 13 the ejection piston has the outlet line 18b of its internal channel 18 in fluid communication with the hose 20.

Advantageously, a motorized means 26 is provided for regulating the opening pressure of the cream frother valve 9 connected to the control unit 24.

The cream frother valve 9 comprises a valve body 27 in which there is a shutter 28 connected to the adjusting means 26.

The shutter 28 is connected to the motorized regulating means 26 with interposition of an elastic element 29.

The motorized adjusting means 26 comprises a linear motor 30 having a translating outlet shaft 31.

The elastic element 29 is formed by a helical spring positioned coaxially with the outlet shaft 31 of the linear motor 30.

In particular, the outlet shaft 31 of the linear motor 30 is connected to an end of the helical spring to whose opposite end the shutter 28 is connected in turn.

The extent of compression deformation of the helical spring obtainable through the motorized regulating means 26 is proportional to the opening pressure of the cream frother valve 9.

Obviously, the construction of the motorized regulating means 26 now illustrated is only illustrative, since the motorized regulating means may alternatively provide for example a rotary output shaft connected appropriately to the shutter through the elastic element, which is also appropriately conformed.

The valve body 27 has an inlet line 32, an outlet line 33 and advantageously also a relief line 34.

The cream frother valve 9 also has a hydraulic sealing means 35 movable between a connection position and an isolating position between the outlet line 33 and the relief line 34.

The hydraulic sealing means 35 comprises a sealing gasket 36 integrally borne by a portion of the output shaft 31 of the linear motor 30 which extends within the valve body 27.

The control unit 24 communicates with the flow meter 3, the boiler 4, the grinder 23, the infusion device 6 and the control panel 25 and is configured to control the motorized regulating means 26 as a function of the current values of the flow rate and/or pressure detected in the hydraulic circuit, in particular of the flow rate, since in the specific case only the flow meter 3 is provided.

The control unit 24 is advantageously configured to control the motorized regulating means 26 in real time.

For that purpose, the control unit 24 has corresponding reference values stored in the memory thereof, referring to the flow rate and/or pressure present in the hydraulic circuit for each selectable infusion cycle.

The control unit 24 compares the current flow rate and/or pressure value detected in an infusion cycle with the corresponding reference value and controls the motorized regulating means 26 so as to eliminate any deviation between said values.

The operation of the coffee machine according to the invention appears clear from the description and illustration and, in particular, is more precisely as follows.

When the user selects a dispensing cycle the electronic controller 24 controls the performance in a temporal sequence of a pre-dispensing cycle, a dispensing cycle and a post-dispensing cycle.

Initially, the infusion cylinder 11 is disengaged from the closing piston 12 and the ejection piston 13 is in the retracted condition towards the bottom of the infusion cylinder 11 in which the internal channel 18 of the ejection piston 13 is connected to the hose 20 of the dispensing conduit 8.

The grinder 23 is activated and feeds by gravity a load of coffee into the infusion chamber 7 through a loading hopper 41.

The infusion cylinder 11 is then moved until it is engaged with the closing piston 12.

At this point the pre-dispensing cycle begins.

Through the motorized regulating means 26 the electronic controller 24 controls the advancement of the output shaft 31 of the linear motor 30 until a front stroke end in which the helical spring 29 is in the highest state of compression to which the maximum opening pressure for the cream frother valve 9 corresponds. This optimises the uniform wetting of the load of coffee 14 contained in the infusion chamber 7 limiting the possibility of any preferential paths being created for the liquid through the load of coffee 14 during the dispensing cycle.

At the end of the pre-dispensing cycle the electronic controller 24 performs a new initial setting of the setting of the cream frother valve 9 based on the default values stored in the memory and/or based on values deduced from one or more previous dispensing cycles.

During the dispensing cycle, the electronic controller 24 acquires the flow rate value from the flow meter 3 and compares it with the corresponding reference value stored in the memory for the selected dispensing cycle. During the dispensing cycle if the electronic controller 24 detects a deviation between the measured value and the corresponding reference value for the flow rate, it controls a change to the initial setting of the cream frother valve 9 through the motorized regulating means 26 so as to eliminate such deviation.

Throughout the whole dispensing cycle the range of the output shaft 31 of the linear motor 30 is however such as to keep the gasket 36 in a connection position between the outlet line 33 and the inlet line 32 of the valve body 27.

At the end of the dispensing cycle the infusion cylinder 7 is separated from the closing piston 12 and the ejection piston 13 is raised until the load of spent coffee grounds 14 is taken beyond the top 11c of the infusion cylinder 11 to the height of an oscillating scraper 42 hinged to the infusion cylinder 11. In a known way the scraper 42, relevantly activated by effect of the movement of the infusion cylinder 11 itself, ejects the load of spent coffee grounds 14 which is then collected in a relevant container not shown.

When the ejection piston 13 is raised, the connection of its internal conduit 18 with the hose 20 is interrupted, which hose then comes into communication with the relief line 11d of the infusion cylinder 11.

Furthermore, as soon as the dispensing cycle has finished and the closing piston 12 starts to be raised, the electronic controller 24 starts the performance of the post-dispensing cycle, controlling the retraction of the output shaft 31 of the linear motor 30 through the motorized regulating means 26 until a position in which the gasket 36 connects the relief line 34 with the outlet line 33 of the valve body 27. In this situation the residual liquid contained in the dispensing line 8 at the end of the dispensing cycle can be discharged in part through the dispenser 10 and in part through the relief line 11d of the infusion cylinder 11 by virtue of the connection with the atmosphere defined by the relief lines 11d, 34.

## Claims

1. A coffee machine (1) comprising a hydraulic circuit comprising an infusion device (6), and an infusion dispensing line (8) equipped with a cream frother valve (9), there also being provided means for detecting the flow rate and/or pressure present in said hydraulic circuit, motorized means (26) for regulating the pressure for opening the cream frother valve (9), and a control unit (24) in communication with said motorized regulating means (26) and with said detection means, said control unit (24) being configured to control said motorized regulating means (26) as a function of the current values of the flow rate and/or pressure detected by said detection means, **characterized in that** said cream frother valve (9) comprises a valve body (27), in which there is a shutter (28) connected to said motorized regulating means (26), said shutter (28) being connected to said motorized regulating means (26) with interposition of an elastic element (29).

2. The coffee machine (1) according to claim 1, **characterized in that** said control unit (24) controls said motorized regulating means (26) in real time.

3. The coffee machine (1) according to any one of the preceding claims, **characterized in that** said control unit (24) has corresponding reference values stored in the memory thereof, said reference values referring to the flow rate and/or pressure present in the hydraulic circuit for each selectable infusion cycle.

4. The coffee machine (1) according to the preceding claim, **characterized in that** said control unit (24) is configured so as to compare the current flow rate and/or pressure value(s) detected in an infusion cycle with the corresponding reference value and to control the motorized regulating means (26) so as to eliminate any deviation between said values.

5. The coffee machine (1) according to any one of the preceding claims, **characterized in that** said detection means comprises a flow meter (3) and/or a pressure switch.

6. The coffee machine (1) according to claim 1, **characterized in that** said motorized regulating means (26) comprises a linear motor (30) that has a translating output shaft (31) and **in that** said elastic element (29) consists of a helical spring positioned coaxially with said output shaft (31).

7. The coffee machine (1) according to claim 1, **characterized in that** said valve body (27) has an inlet line (32), an outlet line (33) and a relief line (34).

8. The coffee machine (1) according to claim 1, **characterized in that** said cream frother valve (9) has a hydraulic sealing means (35) that is movable between a connecting position and an isolating position between said outlet line (33) and said relief line (34) of said cream frother valve (9).

9. The coffee machine (1) according to the preceding claim, **characterized in that** said hydraulic sealing means (35) comprises at least one sealing gasket (36).

10. The coffee machine (1) according to the preceding claim, **characterized in that** said output shaft (31) extends within said valve body (27) and integrally bears said sealing gasket (36).

11. The coffee machine (1) according to any one of the preceding claims, **characterized in that** said dispensing line (8) comprises at least one hose (20).

12. The coffee machine (1) according to any one of claims 7 to 11, **characterized in that** it has a post-dispensing cycle in which said motorized regulating means (26) arranges said hydraulic sealing means (35) in said connecting position.

13. The coffee machine (1) according to any one of the preceding claims, **characterized in that** it has a pre-dispensing cycle in which said cream frother valve (9) is set at the maximum opening pressure by said motorized regulating means (26).

## Patentansprüche

1. Kaffeemaschine (1), umfassend einen Hydraulikkreis, umfassend eine Aufgussvorrichtung (6) und eine Aufgussausgabeleitung (8), ausgestattet mit einem Crema-Aufschäumventil (9), wobei auch Mittel bereitgestellt sind, um die Durchflussmenge und/oder den Druck im Hydraulikkreis zu erfassen, sowie motorisch betriebene Mittel (26) zur Regelung des Drucks für die Öffnung des Crema-Aufschäumventils (9) und ein Steuergerät (24) in Kommunikation mit den motorisch betriebenen Regulierungsmitteln (26) und den Erfassungsmitteln, wobei das Steuergerät (24) ausgelegt ist, um die motorisch betriebenen Regulierungsmittel (26) als eine Funktion von den von den Erfassungsmitteln erfassten Istwerten der Durchflussmenge und/oder des Drucks zu steuern, **dadurch gekennzeichnet, dass** das Crema-Aufschäumventil (9) ein Ventilgehäuse (27) umfasst, in dem ein Schließer (28) bereitgestellt ist, der mit den motorisch betriebenen Regulierungsmitteln (26) verbunden ist, wobei der Schließer (28) mit Einfügung eines elastischen Elements (29) mit den motorisch betriebenen Regulierungsmitteln (26) verbunden ist.

2. Kaffeemaschine (1) nach Anspruch 1, **dadurch gekennzeichnet, dass** das Steuergerät (24) die motorisch betriebenen Regulierungsmittel (26) in Echtzeit steuert.

3. Kaffeemaschine (1) nach einem der vorhergehenden Ansprüche, **dadurch gekennzeichnet, dass** das Steuergerät (24) entsprechende Referenzwerte besitzt, die in dessen Speicher gespeichert sind, wobei sich die Referenzwerte auf die Durchflussmenge und/oder den Druck im Hydraulikkreis für jeden wählbaren Aufgusszyklus beziehen.

4. Kaffeemaschine (1) nach dem vorhergehenden Anspruch, **dadurch gekennzeichnet, dass** das Steuergerät (24) ausgelegt ist, um den/die in einem Aufgusszyklus erfassten Istwert(e) von Durchflussmenge und/oder Druck mit dem entsprechenden Referenzwert zu vergleichen und die motorisch betriebenen Regulierungsmittel (26) so zu steuern, dass jegliche Abweichung zwischen diesen Werten vermieden wird.

5. Kaffeemaschine (1) nach einem der vorhergehenden Ansprüche, **dadurch gekennzeichnet**, die Erfassungsmittel einen Durchflussmesser (3) und/oder einen Druckschalter umfassen.

6. Kaffeemaschine (1) nach Anspruch 1, **dadurch gekennzeichnet, dass** die motorisch betriebenen Regulierungsmittel (26) einen Linearmotor (30) umfassen, der eine verfahrende Abtriebswelle (31) aufweist, und dadurch, dass das elastische Element (29) aus einer Schraubenfeder besteht, die koaxial zur Abtriebswelle (31) angeordnet ist.

7. Kaffeemaschine (1) nach Anspruch 1, **dadurch gekennzeichnet, dass** das Ventilgehäuse (27) eine Einlassleitung (32), eine Auslassleitung (33) und eine Entlüftungsleitung (34) aufweist.

8. Kaffeemaschine (1) nach Anspruch 1, **dadurch gekennzeichnet, dass** das Crema-Aufschäumventil (9) hydraulische Abdichtungsmittel (35) aufweist, die zwischen einer Verbindungsposition und einer Isolierposition zwischen der Auslassleitung (33) und der Entlüftungsleitung (34) des Crema-Aufschäumventils (9) bewegbar sind.

9. Kaffeemaschine (1) nach dem vorhergehenden Anspruch, **dadurch gekennzeichnet, dass** die hydraulischen Abdichtungsmittel (35) mindestens eine abdichtende Dichtung (36) umfassen.

10. Kaffeemaschine (1) nach dem vorhergehenden Anspruch, **dadurch gekennzeichnet, dass** sich die Abtriebswelle (31) innerhalb des Ventilgehäuses (27) erstreckt und die abdichtende Dichtung (36) vollständig trägt.

11. Kaffeemaschine (1) nach einem der vorhergehenden Ansprüche, **dadurch gekennzeichnet**, die Ausgabeleitung (8) mindestens einen Schlauch (20) umfasst.

12. Kaffeemaschine (1) nach einem der Ansprüche 7 bis 11, **dadurch gekennzeichnet, dass** sie einen Zyklus nach der Ausgabe aufweist, in dem die motorisch betriebenen Regulierungsmittel (26) die hydraulischen Abdichtungsmittel (35) in der Verbindungsposition anordnen.

13. Kaffeemaschine (1) nach einem der vorhergehenden Ansprüche, **dadurch gekennzeichnet, dass** sie einen Zyklus vor der Ausgabe aufweist, in dem das Crema-Aufschäumventil (9) von den motorisch betriebenen Regulierungsmitteln (26) auf dem maximalen Öffnungsdruck eingestellt ist.

## Revendications

1. Machine à café (1) comprenant un circuit hydraulique comprenant un dispositif d'infusion (6) et une conduite de distribution d'infusion (8) équipée d'une soupape (9) moussante à crème, des moyens étant aussi prévus pour détecter le débit et/ou la pression présents dans ledit circuit hydraulique, des moyens motorisés (26), servant à régler la pression pour ouvrir la soupape (9) moussante à crème, et une unité de commande (24) en communication avec lesdits moyens de réglage (26) motorisés et avec lesdits moyens de détection, ladite unité de commande (24) étant configurée pour commander lesdits moyens de réglage (26) motorisés en fonction de valeurs actuelles du débit et/ou de la pression détectés par lesdits moyens de détection, **caractérisée en ce que** la soupape (9) moussante à crème comprend un corps de soupape (27) dans lequel se trouve un obturateur (28) relié auxdits moyens de réglage (26) motorisés, ledit obturateur (28) étant relié auxdits moyens de réglage (26) motorisés avec interposition d'un élément élastique (29) .

2. Machine à café (1) selon la revendication 1, **caractérisée en ce que** l'unité de commande (24) commande lesdits moyens de réglage (26) motorisés en temps réel.

3. Machine à café (1) selon l'une quelconque des revendications précédentes, **caractérisée en ce que** ladite unité de commande (24) comporte des valeurs de référence correspondantes stockées dans sa mémoire, lesdites valeurs de référence faisant référence au débit et/ou à la pression présents dans le circuit hydraulique pour chaque cycle d'infusion sélectionnable.

4. Machine à café (1) selon la revendication précédente, **caractérisée en ce que** ladite unité de commande (24) est configurée de sorte à comparer la/les valeur(s) de débit et/ou de pression détectée(s) dans un cycle d'infusion à la valeur de référence correspondante et à commander les moyens de réglage (26) motorisés de sorte à éliminer tout écart entre lesdites valeurs.

5. Machine à café (1) selon l'une quelconque des revendications précédentes, **caractérisée en ce que** lesdits moyens de détection comprennent un débitmètre (3) et/ou un pressostat.

6. Machine à café (1) selon la revendication 1, **caractérisée en ce que** lesdits moyens de réglage (26) motorisés comprennent un moteur linéaire (30) comportant un arbre de sortie (31) en translation et **en ce que** ledit élément élastique (29) consiste en un ressort hélicoïdal positionné coaxialement au dit arbre de sortie (31).

7. Machine à café (1) selon la revendication 1, **caractérisée en ce que** ledit corps de soupape (27) comporte une conduite d'entrée (32), une conduite de sortie (33) et une conduite de décharge (34).

8. Machine à café (1) selon la revendication 1, **caractérisée en ce que** ladite soupape (9) moussante à crème comporte des moyens d'étanchéité (35) hydraulique étant mobiles entre une position de raccordement et une position d'isolation entre ladite conduite de sortie (33) et ladite conduite de décharge (34) de ladite soupape (9) moussante à crème.

9. Machine à café (1) selon la revendication précédente, **caractérisée en ce que** lesdits moyens d'étanchéité (35) hydraulique comprennent au moins une garniture d'étanchéité (36).

10. Machine à café (1) selon la revendication précédente, **caractérisée en ce que** ledit arbre de sortie (31) se prolonge à l'intérieur dudit corps de soupape (27) et supporte intégralement ladite garniture d'étanchéité (36).

11. Machine à café (1) selon l'une quelconque des revendications précédentes, **caractérisée en ce que** ladite conduite de distribution (8) comprend au moins un flexible (20).

12. Machine à café (1) selon l'une quelconque des revendications de 7 à 11, **caractérisée en ce qu'**elle comporte un cycle de aprés-distribution dans lequel lesdits moyens de réglage (26) motorisés disposent lesdits moyens d'étanchéité (35) hydraulique dans ladite position de raccordement.

13. Machine à café (1) selon l'une quelconque des revendications précédentes, **caractérisée en ce qu'**elle comporte un cycle de pré-distribution dans lequel ladite soupape (9) moussante à crème est réglée à la pression maximum d'ouverture par lesdits moyens de réglage (26) motorisés.
